# EUROPÄISCHE PATENTSCHRIFT

(11) **EP 3 131 652 B1**
(45) Veröffentlichungstag und Bekanntmachung des Hinweises auf die Patenterteilung: **28.02.2018**
(21) Anmeldenummer: 15721632.6
(22) Anmeldetag: 29.04.2015
(51) Int. Cl.: B01D 3/08

(54) **ROTATIONSVERDAMPFER**
ROTARY EVAPORATOR
EVAPORATEUR ROTATIF

(30) Priorität: 09.05.2014 DE 102014106553
(43) Veröffentlichungstag der Anmeldung: 22.02.2017
(73) Patentinhaber: Hans Heidolph GmbH, 93309 Kelheim (DE)
(72) Erfinder: CARL, Joachim, 90547 Stein (DE); BAYER, Maximilian, 91183 Abenberg (DE); LOHMANN, Walter, 90530 Wendelstein (DE)
(74) Vertreter: Manitz Finsterwald Patentanwälte PartmbB
(86) Internationale Anmeldenummer: PCT/EP2015/059346
(87) Internationale Veröffentlichungsnummer: WO 2015/169664

(56) Entgegenhaltungen:
- EP-A1- 0 641 582
- WO-A1-2004/039471
- DE-A1- 4 319 498
- US-A- 5 639 354

## Beschreibung

Die vorliegende Erfindung betrifft einen Rotationsverdampfer mit einem Rotationsantrieb.

Bei einem Rotationsverdampfer handelt es sich um ein Laborgerät, das üblicherweise ein Heizbad und einen in das Heizbad eintauchbaren Verdampferkolben umfasst. Im Betrieb wird ein in dem Heizbad befindliches flüssiges Medium, beispielsweise Wasser oder - für höhere Temperaturen - Öl, geheizt, um damit den in das Heizbad eingetauchten Verdampferkolben zu erwärmen. Hierdurch kann ein in dem Verdampferkolben enthaltenes Gemisch, insbesondere Flüssigkeitsgemisch, erwärmt werden, so dass das jeweilige Destillat, insbesondere Lösungsmittel, verdampft wird. Das verdampfte Destillat strömt dann in einen Kühler des Rotationsverdampfers, um dort zu kondensieren. Anschließend wird das Kondensat in einem Auffangkolben gesammelt. Der im Verdampferkolben zurückbleibende Destillationsrückstand kann weiter aufgearbeitet oder analysiert werden. Häufig ist zusätzlich eine Vakuumpumpe zur Erzeugung eines Vakuums in den Verdampferkolben und dem Kühler vorgesehen, um die Siedetemperatur zu senken, wodurch die Destillation beschleunigt und die Destillationsrate erhöht werden kann. Ein Heizbad ist jedoch nicht zwingend erforderlich. Beispielsweise kann eine Verdampfung auch allein durch Erzeugen eines Vakuums bewirkt werden. Anstelle eines Heizbads kann z.B. auch eine Heizkalotte, ein Heizpilz oder ein Heizköcher verwendet werden.

Darüber hinaus umfasst ein Rotationsverdampfer einen Rotationsantrieb, um den Verdampferkolben in dem Heizbad bzw. dem jeweiligen Heizmittel zu drehen. Durch die Rotation wird der Verdampferkolben gleichmäßig beheizt und an der beheizten Innenwand des Verdampferkolbens wird ein dünner, eine große Oberfläche aufweisender Flüssigkeitsfilm erzeugt, aus dem das Destillat schnell, effizient und schonend verdampft werden kann.

Es ist bekannt, den Verdampferkolben mit einer Art Überwurfmutter oder mit einem Spannmechanismus an den Rotationsantrieb des Rotationsverdampfers zu koppeln. Das Koppeln bzw. Befestigen vor allem von großen Verdampferkolben, insbesondere wenn diese gefüllt sind, bereitet dem Anwender jedoch oft Schwierigkeiten, da es für die jeweilige Befestigung erforderlich ist, den Kolbenhals des Verdampferkolbens hinreichend genau an dem Rotationsantrieb zu positionieren, um den jeweiligen Befestigungsmechanismus betätigen zu können. Auch das Lösen von Verdampferkolben gestaltet sich mitunter entsprechend schwierig. EP 0 641 582 und US 5 639 354 offenbaren einen Rotationsverdampfer. Es ist eine Aufgabe der Erfindung, einen Rotationsverdampfer der eingangs genannten Art zur Verfügung zu stellen, der das Befestigen und Lösen des Verdampferkolbens am bzw. vom Rotationsantrieb für den Anwender möglichst einfach gestaltet.

Die Lösung der Aufgabe erfolgt durch einen Rotationsverdampfer mit den Merkmalen des Anspruchs 1, und insbesondere dadurch, dass eine Kolbenauflage für einen mit dem Rotationsantrieb koppelbaren Verdampferkolben vorgesehen ist. Die Kolbenauflage umfasst zwei Querträger zum Stützen des Verdampferkolbens an zwei voneinander beabstandeten Stützbereichen und eine ein Führungselement aufweisende Längsführung, an der die beiden Querträger verfahrbar, insbesondere verschiebbar, angeordnet sind, um den gegenseitigen Abstand der beiden Querträger zu variieren, wobei das Führungselement in Längsrichtung verschiebbar geführt ist, um den Verdampferkolben zwischen einer Koppelstellung mit dem Rotationsantrieb und einer von dem Rotationsantrieb rückgesetzten oder entfernten Stellung zu verschieben. Bei dem Führungselement handelt es sich um eine Führungsschiene, eine Führungswelle oder eine Gewindespindel. Die Kolbenauflage trägt das Gewicht des Verdampferkolbens, so dass hierdurch der Anwender entlastet ist. Durch die Möglichkeit, den Abstand zwischen den beiden Querträgern zu variieren, wird dem Anwender ermöglicht, die Kolbenauflage an alle herkömmlichen bzw. gebräuchlichen Kolbengrößen anzupassen. Das verschiebbare Führungselement ermöglicht darüber hinaus, dass die beiden Querträger unter Beibehaltung ihres gegenseitigen Abstands gemeinsam verschiebbar sind. Durch diese Verschiebemöglichkeit kann der Anwender zum Befestigen des Verdampferkolbens am Rotationsantrieb den Kolbenhals des Verdampferkolbens auf einfache Weise und zumindest im Wesentlichen ohne Kraftaufwand an den Rotationsantrieb und den jeweiligen Befestigungsmechanismus heranfahren und dort positionieren. Auch das Lösen des Verdampferkolbens von dem Rotationsantrieb wird hierdurch erleichtert. Wird der Befestigungsmechanismus gelöst, kann der Verdampferkolben von der Kolbenauflage getragen und damit ohne große Anstrengung durch bloßes Verschieben von seiner Koppelstellung am Rotationsantrieb entfernt werden. Insgesamt kann der Bedienkomfort des Rotationsverdampfers dadurch erheblich erhöht werden.

Insbesondere gilt Folgendes: Die Längsführung verläuft in Längsrichtung, die Längsrichtung entspricht der Richtung der Längsführung, bei der Längsführung handelt es sich um eine Linearführung, die beiden Querträger verlaufen quer, insbesondere senkrecht zu der Längsführung, die beiden Querträger verlaufen parallel zueinander und/oder die beiden Querträger sind voneinander beabstandet. Vorzugsweise ist das Führungselement ausschließlich in einer horizontalen Richtung verschiebbar geführt. Damit ist auch der Verdampferkolben lediglich in der Horizontalen verfahrbar. Grundsätzlich ist es aber auch möglich, dass das Führungselement in einer gegenüber der Horizontalen geneigten Richtung verschiebbar geführt ist.

Bevorzugt ist das Führungselement gleitgeführt. Bei einer besonders einfachen Gleitführung sind die miteinander korrespondierenden Führungselemente nicht durch Wälzkörper voneinander getrennt. Grundsätzlich kann die Gleitführung aber auch derartige Wälzkörper aufweisen.

Gemäß einer Ausführungsform der Erfindung ist das Führungselement mittels einer Federeinrichtung in Richtung der Koppelstellung des Verdampferkolbens vorgespannt. Durch die Federeinrichtung kann ein unbeabsichtigtes Verschieben des Verdampferkolbens aus seiner Koppelstellung, in der der Verdampferkolben an dem Rotationsantrieb des Rotationsverdampfers befestigt werden kann, verhindert werden. Zudem kann durch die Feder-Unterstützung erreicht werden, dass der Verdampferkolben stets - auch während der wie auch immer geartete Befestigungsmechanismus betätigt wird - gegen die Rotationsantrieb gedrückt wird, was das Befestigen des Verdampferkolbens am Rotationsantrieb vereinfacht.

Das Führungselement kann um eine Verschiebestrecke von wenigstens 20 mm, vorzugsweise wenigstens 40 mm, und/oder von höchstens 120 mm, vorzugsweise höchstens 100 mm, verschiebbar sein. Die Koppelstellung und die von dem Rotationsantrieb zurückgesetzte Stellung können wenigstens um 20 mm, insbesondere wenigstens 40 mm, und/oder höchstens um 120 mm, vorzugsweise höchstens 100 mm, voneinander entfernt sein.

Gemäß einer weiteren Ausführungsform der Erfindung sind die beiden Querträger mittels einer jeweiligen Feststelleinrichtung an dem Führungselement der Längsführung, insbesondere einer Führungswelle, feststellbar. Vorzugsweise ist die jeweilige Feststelleinrichtung als Rasteinrichtung ausgebildet und die beiden Querträger sind jeweils an wenigstens zwei, vorzugsweise wenigstens drei, unterschiedlichen Rastpositionen mit dem Führungselement verrastbar. Im eingerasteten Zustand können die Querträger dann nicht mehr entlang der Längsführung verschoben werden. Bevorzugt umfassen die Rastpositionen Ladepositionen, die derart gewählt sind, dass die durch sie definierten Abstände der Stützbereiche auf verschiedene Verdampferkolben mit unterschiedlichen vorgegebenen Größen bzw. Standardgrößen, beispielsweise 6l, 10l, 20l, abgestimmt sind. Grundsätzlich ist es aber auch möglich, dass die Querträger über Klemmschrauben oder dergleichen an dem Führungselement festgesetzt werden.

Die mit der Rasteinrichtung verbundenen Merkmale können auch unabhängig von dem vorstehend erläuterten verschiebbaren Führungselement realisiert werden. Die vorliegende Erfindung betrifft daher auch einen Rotationsverdampfer mit einem Rotationsantrieb und einer Kolbenauflage für einen mit dem Rotationsantrieb koppelbaren Verdampferkolben, wobei die Kolbenauflage zwei Querträger zum Stützen des Verdampferkolbens an zwei voneinander beabstandeten Stützbereichen und eine Längsführung umfasst, an der die beiden Querträger verfahrbar angeordnet sind, um den gegenseitigen Abstand der beiden Querträger zu variieren, wobei die beiden Querträger mittels einer jeweiligen Feststelleinrichtung an dem Führungselement der Längsführung feststellbar sind, und wobei die jeweilige Feststelleinrichtung als Rasteinrichtung ausgebildet ist und die beiden Querträger jeweils an wenigstens zwei, vorzugsweise wenigstens drei, unterschiedlichen Rastpositionen mit dem Führungselement verrastbar sind.

Zum Verrasten des jeweiligen Querträgers mit dem Führungselement kann an der jeweiligen Rastposition, insbesondere Ladeposition und/oder Parkposition, eine Rastnut, insbesondere in Form einer Ringnut, an dem Führungselement vorgesehen sein, in die ein dem jeweiligen Querträger zugeordneter, zwischen einer die Verrastung sichernden Stellung und einer die Verrastung freigebenden Stellung beweglicher Rastvorsprung eingreift. Der jeweilige Rastvorsprung kann z.B. als Rastbolzen ausgebildet sein.

Dabei ist es bevorzugt, wenn der jeweilige Rastvorsprung in die die Verrastung sichernde Stellung vorgespannt ist. Wird der jeweilige Querträger entlang dem Führungselement verschoben, rastet der Rastvorsprung, sobald der Querträger eine Rastposition überfährt, automatisch in die Rastnut ein. Zusätzlich oder alternativ kann vorgesehen sein, dass der jeweilige Rastvorsprung über einen jeweiligen, für einen Benutzer zugänglichen Betätigungsabschnitt, insbesondere entgegen einer Vorspannung, manuell in die die Verrastung freigebende Stellung bewegbar ist.

Das Verfahren der beiden Querträger bzw. die Einstellung des gegenseitigen Abstands der beiden Querträger kann aber auch mittels eines Schraubgetriebes bzw. eines Spindelantriebs erfolgen. Hierbei kann das Führungselement als Gewindespindel mit einem ersten Gewindeabschnitt mit einem Links- oder Rechtsgewinde und einem zweiten Gewindeabschnitt mit einem hierzu gegenläufigen Gewinde ausgebildet sein, wobei der erste Querträger über ein entsprechendes erstes Gegengewinde auf dem ersten Gewindeabschnitt und der zweite Querträger über ein entsprechendes zweites Gegengewinde auf dem zweiten Gewindeabschnitt verschiebbar und drehfest gelagert ist. Durch das Schraubgetriebe kann eine Drehbewegung der Gewindespindel, beispielsweise durch einen Motor oder eine Kurbel, in Längsbewegungen der beiden Gewindeabschnitte und damit der beiden Querträger aufeinander zu bzw. voneinander weg umgesetzt werden. Der gegenseitige Abstand der beiden Querträger kann hierbei stufenlos verstellt werden.

Die mit dem Schraubgetriebe verbundenen Merkmale können auch unabhängig von dem vorstehend erläuterten verschiebbaren Führungselement realisiert werden. Die vorliegende Erfindung betrifft daher auch einen Rotationsverdampfer mit einem Rotationsantrieb und einer Kolbenauflage für einen mit dem Rotationsantrieb koppelbaren Verdampferkolben, wobei die Kolbenauflage zwei Querträger zum Stützen des Verdampferkolbens an zwei voneinander beabstandeten Stützbereichen und eine Längsführung umfasst, an der die beiden Querträger verfahrbar angeordnet sind, um den gegenseitigen Abstand der beiden Querträger zu variieren, wobei die Verschiebung der beiden Querträger mittels eines Schraubgetriebes bzw. eines Spindelantriebs erfolgt.

Gemäß einer weiteren Ausführungsform der Erfindung umfasst die Längsführung zusätzlich zu dem verschiebbar geführten Führungselement wenigstens ein, parallel zu diesem verlaufendes, lagefest angeordnetes weiteres Führungselement. Insbesondere kann die Längsführung als eine Doppellinearführung mit zwei voneinander beabstandeten Führungselementen ausgebildet sein.

Vorzugsweise ist jeder der beiden Querträger an seinen beiden Enden mit jeweils einem Schlitten versehen, wobei der jeweilige Querträger über die beiden Schlitten verfahrbar an den beiden Führungselementen angeordnet ist. Die Führungselemente können als Rundstäbe ausgebildet sein. Die Schlitten können mit zu den Rundstäben gegenförmigen, zylinderförmigen Durchgängen versehen sein. Allgemein kann es sich bei der Längsführung um eine Schlittenführung handeln.

An den beiden Querträgern kann jeweils ein Auflage-Element, insbesondere eine Auflage-Rolle, für den Verdampferkolben angebracht sein. Das Auflage-Element kann eine doppelkegelartige Form aufweisen. Insbesondere verläuft die Achse des Doppelkegels in Querrichtung bzw. in Richtung der Längserstreckung der Querträger. Durch derart geformte Auflage-Elemente kann der Verdampferkolben rollsicher auf der Kolbenauflage gehalten werden.

Die Kolbenauflage kann einen Unterbau aufweisen, der die Längsführung trägt. Es kann ein Heizbad vorgesehen sein, das unterhalb der Kolbenauflage in dem Unterbau angeordnet ist. Die Kolbenauflage kann fest mit dem übrigen Rotationsverdampfer verbunden sein.

Die Erfindung betrifft ferner eine Kolbenauflage für einen mit einem Rotationsantrieb eines Rotationsverdampfers koppelbaren Verdampferkolben, die zwei Querträger zum Stützen des Verdampferkolbens an zwei voneinander beabstandeten Stützbereichen und eine ein Führungselement aufweisende Längsführung umfasst, an der die beiden Querträger verfahrbar, insbesondere verschiebbar, angeordnet sind, um den gegenseitigen Abstand der beiden Querträger zu variieren, wobei das Führungselement in Längsrichtung verschiebbar geführt ist, um den Verdampferkolben zwischen einer Koppelstellung mit dem Rotationsantrieb und einer von dem Rotationsantrieb rückgesetzten Stellung zu verschieben.

Vorteilhafte Ausführungsformen der erfindungsgemäßen Kolbenauflage ergeben sich in analoger Weise aus den vorstehend zu dem erfindungsgemäßen Rotationsverdampfer beschriebenen Ausführungsformen. Insbesondere können die mit der vorgenannten Rasteinrichtung verbundenen Merkmale und/oder die mit dem vorgenannten Schraubgetriebe verbundenen Merkmale auch wieder unabhängig von dem verschiebbaren Führungselement realisiert werden.

Weiterbildungen der Erfindung sind auch in den abhängigen Ansprüchen, der Beschreibung sowie den beigefügten Zeichnungen angegeben.

Die Erfindung wird nachfolgend beispielhaft unter Bezugnahme auf die Zeichnungen beschrieben. Es zeigen,
- Fig. 1.: eine erfindungsgemäße Kolbenauflage eines Rotationsverdampfers mit in einer Parkposition eingerasteten Querträgern und einem in einer Koppelstellung befindlichen Führungselement,
- Fig. 2: die Kolbenauflage von Fig. 1, wobei die Querträger in einer Ladeposition eingerastet sind und das Führungselement sich in einer zurückgesetzten Stellung befindet,
- Fig. 3: die Kolbenauflage von Fig. 1, wobei die Querträger in einer zweiten Ladeposition eingerastet sind, und
- Fig. 4: eine schematische Seitenansicht eines Führungselements einer erfindungsgemäßen Kolbenauflage gemäß einer weiteren Ausführungsform.

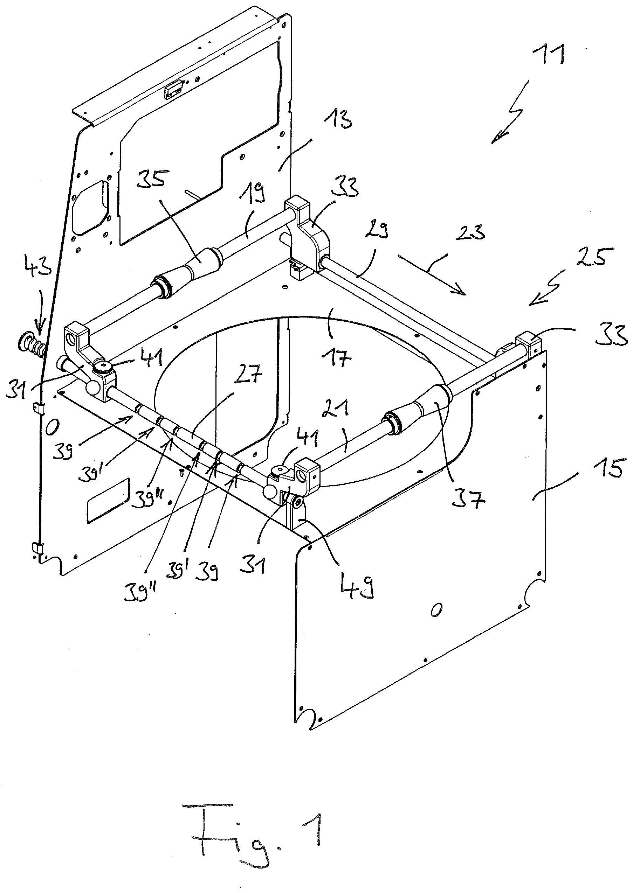

Die in Fig. 1 gezeigte Kolbenauflage 11 eines ansonsten nicht gezeigten Rotationsverdampfers umfasst zwei Seitenwangen 13, 15, von denen die höhere Seitenwange 13 dem Rotationsantrieb des Rotationsverdampfers zugewandt ist. Die beiden Seitenwangen 13, 15 sind auf Höhe des oberen Endes der niedrigeren Seitenwange 15 über eine eine zentrale, kreisförmige Öffnung ausweisende Platte 17 miteinander verbunden. Zwischen den beiden Seitenwangen 13, 15 und unterhalb der Platte 17 ist ein nicht dargestelltes Heizbad des Rotationsverdampfers angeordnet, in das ein von der Kolbenauflage 11 getragener, mit dem Rotationsantrieb des Rotationsverdampfers gekoppelter Verdampferkolben teilweise eintauchen kann. Zur Kopplung des Verdampferkolbens mit dem Rotationsantrieb wird der Kolbenhals des Verdampferkolbens an der Nabe des Rotationsantriebs befestigt, wobei diese Befestigung durch eine in einem oberen Abschnitt der Seitenwange 13 ausgebildete rechteckförmige Öffnung hindurch erfolgt.

Der mittlere und untere Abschnitt der Seitenwange 13, die Platte 17 und die Seitenwange 15 bilden einen Unterbau der Kolbenauflage 11, auf der zwei Querträger 19, 21 angeordnet sind. Die beiden Querträger 19, 21 sind mittig jeweils mit einer doppelkegelförmigen Auflage-Rolle 35, 37 versehen, auf denen der Verdampferkolben abgestützt wird. Die beiden Querträger 19, 21 sind entlang einer Längsrichtung 23 jeweils verschiebbar angeordnet sind, so dass der gegenseitige Abstand der beiden Querträger 19, 21 variiert werden kann. Hierzu ist eine horizontal und in die Längsrichtung 23 verlaufende Linearführung 25 mit zwei parallel zueinander verlaufenden, als Rundstäbe ausgebildeten Führungswellen 27, 29 vorgesehen, die Führungselemente der Linearführung 25 bilden. Grundsätzlich können die Führungswellen 27, 29 auch als Mehrkantwellen ausgebildet sein. Die beiden Querträger 19, 21 sind über an ihren jeweiligen beiden Enden angebrachte, nach Art von Lagerbuchsen ausgebildete Schlitten 31, 33 verfahrbar auf den beiden Führungswellen 27, 29 geführt.

Dadurch, dass der gegenseitige Abstand der beiden Querträger 19, 21 und damit der gegenseitige Abstand der beiden Stützbereiche, an denen der Verdampferkolben abgestützt wird, variierbar ist, kann die Kolbenauflage 11 an Verdampferkolben verschiedener Größen angepasst werden. Um die Querträger 19, 21 jeweils an entsprechend vorgegebenen Ladepositionen an der Linearführung 25 zu arretieren, weist eine der beiden Führungswellen 27, 29, in der dargestellten Ausführungsform die Führungswelle 27, für jeden der beiden Querträger 19, 21 jeweils drei Ringnuten 39, 39', 39" auf, in die ein jeweiliger Rastbolzen einer als Rasteinrichtung 41 ausgebildeten, in einem jeweiligen Schlitten 31 integrierten Feststelleinrichtung eingreifen kann.

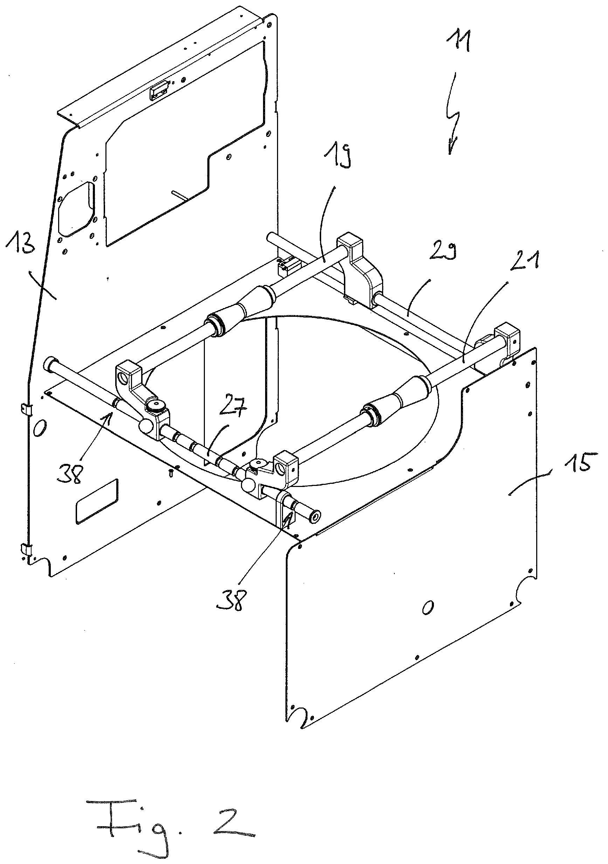

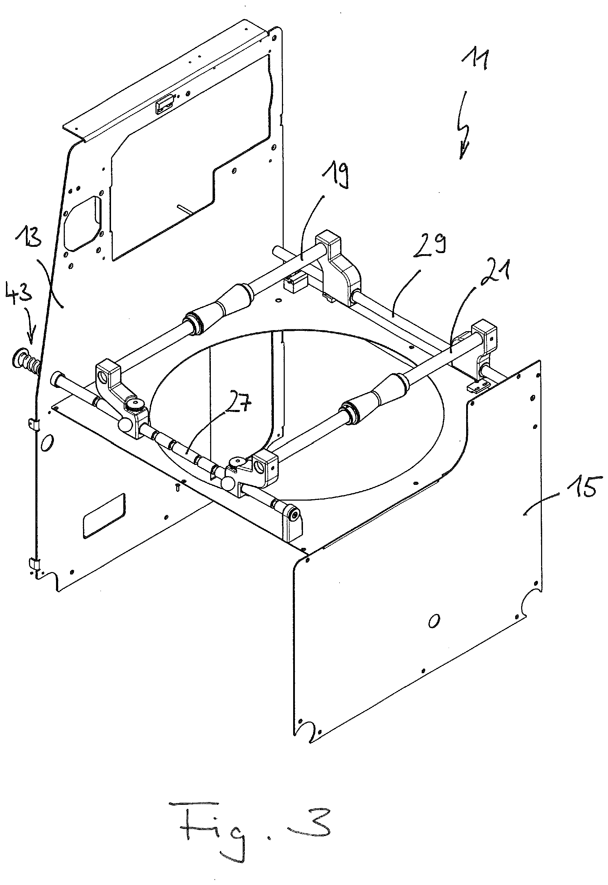

Für eine erste, große Kolbengröße sind die beiden Querträger 19, 21 in den jeweiligen äußeren den Ladepositionen zugeordneten Ringnuten 39 verrastet (vgl. Fig. 2 und 3), für eine zweite, mittlere Kolbengröße in den jeweiligen mittleren Ringnuten 39' und für eine dritte, kleine Kolbengröße in den jeweiligen inneren Ringnuten 39". Darüber hinaus ist jeweils eine Ringnut 38 vorgesehen, die jeweils einer Parkposition der Querträger 19, 21 entspricht (vgl. Fig. 1). Die Rastbolzen sind dabei in die die Verrastung sichernde Stellung, d.h. die Stellung, in der sie in die Ringnuten 38, 39, 39', 39" eingreifen, mittels einer entsprechenden, nicht gezeigten jeweiligen Feder vorgespannt. An den den in die Ringnuten 38, 39, 39', 39" eingreifenden Enden gegenüberliegenden Enden sind die Rastbolzen jeweils mit einem aus dem jeweiligen Schlitten 31 herausstehenden Betätigungsabschnitt versehen, mit dem der jeweilige Rastbolzen entgegen der Vorspannung der jeweiligen Feder manuell in eine die Verrastung freigebende Stellung bewegbar.

Die Führungswelle 29 ist fest mit dem Unterbau der Kolbenauflage 11 verbunden, wohingegen die mit den Ringnuten 38, 39, 39', 39" versehene Führungswelle 27 in Längsrichtung 23 zwischen einer ersten Stellung (vgl. Fig. 1 und 3) und einer zweiten Stellung (vgl. Fig. 2) verschiebbar ist. Die Führungswelle 27 ist dabei mit dem einen Ende in der Seitenwange 13 und mit dem anderen Ende in einem auf der Platte 17 angebrachten Lagerbock 49 geführt. Die maximale Verschiebestrecke der Führungswelle 27 kann beispielsweise zwischen 20 und 80 mm, insbesondere zwischen 40 und 60 mm, bevorzugt ca. 50 mm, betragen.

Mit der Führungswelle 27 werden auch die beiden Querträger 19, 21 und damit auch ein auf den Querträgern 19, 21 befindlicher Verdampferkolben zwischen der ersten Stellung und der zweiten Stellung verschoben. Die erste, in Richtung des Rotationsantriebs verschobene Stellung entspricht einer Koppelstellung, in der der Verdampferkolben an den Rotationsverdampfer herangeführt ist, um dort mit dem Rotationsantrieb gekoppelt zu werden. Die zweite, von dem Rotationsverdampfer weg verschobene Stellung entspricht einer Ladestellung, in der der Verdampferkolben ohne Gefahr eines Anstoßens an den Rotationsantrieb auf die Kolbenauflage 11 aufgesetzt bzw. von dieser entnommen werden kann.

Die Führungswelle 27 und damit die beiden Querträger 19, 21 sind mittels einer Druckfeder 43 in Richtung der Koppelstellung vorgespannt. Im Betrieb des Rotationsverdampfers, d.h. während einer Destillation, befindet sich die Führungswelle 27 und mit ihr die beiden Querträger 19, 21 damit immer in der Koppelstellung. Darüber hinaus kann durch die Feder 43 ein unbeabsichtigtes Verschieben der Führungswelle 27 bzw. der Querträger 19, 21 zumindest weitgehend verhindert werden.

Zum Befestigen eines Verdampferkolbens großer Größe an dem Rotationsantrieb des Rotationsverdampfers werden ausgehend von der Ruhe- bzw. Koppelstellung des Führungswelle 27 gemäß Fig. 1 zunächst die beiden Querträger 19, 21 aus ihrer jeweiligen Parkposition in ihre jeweilige äußere Ladeposition verschoben und dann wird die Führungswelle 27 gegen die Vorspannung der Feder 43 manuell aus ihrer in Fig. 1 gezeigten Stellung in die in Fig. 2 gezeigte Stellung verfahren, in der dann der Verdampferkolben auf die Kolbenauflage 11 aufgesetzt wird. Anschließend wird die Führungswelle 27 durch die Vorspannung der Feder 43 wieder automatisch in ihre Koppelstellung zurückgedrückt (vgl. Fig. 3), in der dann der Verdampferkolben an den Rotationsantrieb montiert werden kann. Grundsätzlich ist es auch möglich, dass zuerst die Führungswelle 27 aus der in Fig. 1 gezeigten Stellung in die in Fig. 2 gezeigte Stellung verschoben wird und erst danach die Ladepositionen der Querträger 19, 21 eingestellt werden.

Zum Entnehmen des Verdampferkolbens vom Rotationsverdampfer wird, nachdem der jeweilige Befestigungsmechanismus zwischen Verdampferkolben und Rotationsantrieb gelöst wurde, die Führungswelle 27 aus der in Fig. 3 gezeigten Stellung in die in Fig. 2 gezeigte Stellung verschoben, in der dann der Verdampferkolben von der Kolbenauflage 11 entfernt wird.

Es versteht sich, dass es sich bei den in den Figuren 1-3 gezeigten Stellungen um Maximalstellungen handelt, zwischen denen die Führungswelle 27 verschiebbar ist. Zum Koppeln bzw. Entkoppeln eines Verdampferkolbens an den bzw. von dem Rotationsantrieb muss die Führungswelle 27 nicht notwendigerweise vollständig bis in die Koppelstellung verschoben werden. Analog muss zum Aufsetzen bzw. Entnehmen des Verdampferkolbens auf die bzw. von der Kolbenauflage 11 nicht notwendigerweise vollständig bis in die Ladestellung verschoben werden.

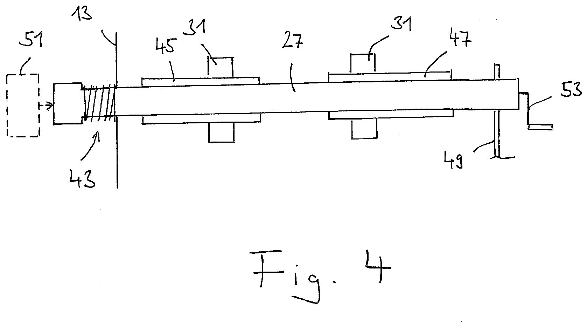

Bei einer alternativen Ausführungsform gemäß Fig. 4 erfolgt die Verschiebung der beiden Querträger 19, 21 bzw. die Verstellung des Abstands der beiden Querträger 19, 21 zueinander durch einen Spindelantrieb. Hierbei ist das Führungselement 27 als eine Gewindespindel ausgebildet, die im Bereich des ersten Querträgers 19 mit einem lediglich schematisch dargestellten Rechts- oder Linksgewinde 45 und im Bereich des zweiten Querträger 21 mit einem lediglich schematisch dargestellten gegenläufigen Gewinde 47 versehen ist. Die beiden Schlitten 31 besitzen ein jeweiliges Gegengewinde, so dass bei einer Drehung der Gewindespindel 27, beispielsweise durch einen intern angeordneten Motor 51 oder eine Handkurbel 53, sich die beiden Querträger 19, 21 aufeinander zu oder voneinander weg bewegen.

Das Befestigen eines Verdampferkolbens am Rotationsantrieb eines Rotationsverdampfers kann durch die vorstehend beschriebene Kolbenauflage daher stark vereinfacht und bedienerfreundlich gestaltet werden.

### Bezugszeichenliste

- 11: Kolbenauflage
- 13: Seitenwange
- 15: Seitenwange
- 17: Platte
- 19: Querträger
- 21: Querträger
- 23: Längsrichtung
- 25: Linearführung
- 27: Führungselement
- 29: Führungselement
- 31: Schlitten
- 33: Schlitten
- 35: Auflage-Rolle
- 37: Auflage-Rolle
- 38: Ringnut
- 39: Ringnut
- 41: Rasteinrichtung
- 43: Feder
- 45: Gewinde
- 47: Gegengewinde
- 49: Lagerbock
- 51: Motor
- 53: Handkurbel

## Patentansprüche

1. Rotationsverdampfer mit einem Rotationsantrieb und einer Kolbenauflage (11) für einen mit dem Rotationsantrieb koppelbaren Verdampferkolben,
wobei die Kolbenauflage (11) zwei Querträger (19, 21) zum Stützen des Verdampferkolbens an zwei voneinander beabstandeten Stützbereichen und eine ein Führungselement (27) aufweisende Längsführung (25) umfasst, an der die beiden Querträger (19, 21) verfahrbar angeordnet sind, um den gegenseitigen Abstand der beiden Querträger (19, 21) zu variieren, wobei das Führungselement (27) eine Führungsschiene, eine Führungswelle oder eine Gewindespindel ist, und
wobei das Führungselement (27) in Längsrichtung (23) verschiebbar geführt ist, um den Verdampferkolben zwischen einer Koppelstellung mit dem Rotationsantrieb und einer von dem Rotationsantrieb rückgesetzten Stellung zu verschieben.

2. Rotationsverdampfer nach Anspruch 1,
**dadurch gekennzeichnet, dass**
das Führungselement (27) gleitgeführt und/oder ausschließlich in einer horizontalen Richtung verschiebbar geführt ist.

3. Rotationsverdampfer nach Anspruch 1 oder 2,
**dadurch gekennzeichnet, dass**
das Führungselement (27) mittels einer Federeinrichtung (43) in Richtung der Koppelstellung des Verdampferkolbens vorgespannt ist.

4. Rotationsverdampfer nach einem der vorstehenden Ansprüche,
**dadurch gekennzeichnet, dass**
das Führungselement (27) um eine Verschiebestrecke von wenigstens 20 mm, vorzugsweise wenigstens 40 mm, verschiebbar ist.

5. Rotationsverdampfer nach einem der vorstehenden Ansprüche,
**dadurch gekennzeichnet, dass**
die beiden Querträger (19, 21) mittels einer jeweiligen Feststelleinrichtung (41) an dem Führungselement (27) der Längsführung (25), insbesondere einer Führungswelle, feststellbar sind.

6. Rotationsverdampfer nach Anspruch 5,
**dadurch gekennzeichnet, dass**
die jeweilige Feststelleinrichtung (41) als Rasteinrichtung ausgebildet ist und die beiden Querträger (19, 21) jeweils an wenigstens zwei, vorzugsweise wenigstens drei, unterschiedlichen Rastpositionen mit dem Führungselement (27) verrastbar sind.

7. Rotationsverdampfer nach Anspruch 6,
**dadurch gekennzeichnet, dass**
zum Verrasten des jeweiligen Querträgers (19, 21) mit dem Führungselement (27) an der jeweiligen Rastposition eine Rastnut (39, 39', 39") an dem Führungselement (27) vorgesehen ist, in die ein dem jeweiligen Querträger (19, 21) zugeordneter, zwischen einer die Verrastung sichernden Stellung und einer die Verrastung freigebenden Stellung beweglicher Rastvorsprung eingreift.

8. Rotationsverdampfer nach Anspruch 7,
**dadurch gekennzeichnet, dass**
der jeweilige Rastvorsprung in die die Verrastung sichernde Stellung vorgespannt ist und/oder über einen jeweiligen, für einen Benutzer zugänglichen Betätigungsabschnitt manuell in die die Verrastung freigebende Stellung bewegbar ist.

9. Rotationsverdampfer nach einem der vorstehenden Ansprüche,
**dadurch gekennzeichnet, dass**
das Verfahren der beiden Querträger (19, 21) mittels eines Schraubgetriebes (27, 31) erfolgt.

10. Rotationsverdampfer nach Anspruch 9,
**dadurch gekennzeichnet, dass**
das Führungselement (27) als Gewindespindel mit einem ersten Gewindeabschnitt (45) mit einem Links- oder Rechtsgewinde und einem zweiten Gewindeabschnitt (47) mit einem hierzu gegenläufigen Gewinde (47) ausgebildet ist, wobei der erste Querträger (19) über ein entsprechendes erstes Gegengewinde (31) auf dem ersten Gewindeabschnitt (45) und der zweite Querträger (21) über ein entsprechendes zweites Gegengewinde (31) auf dem zweiten Gewindeabschnitt (47) verschiebbar und drehfest gelagert ist.

11. Rotationsverdampfer nach einem der vorstehenden Ansprüche,
**dadurch gekennzeichnet, dass**
die Längsführung (25) zusätzlich zu dem verschiebbar geführten Führungselement (27) wenigstens ein, parallel zu diesem verlaufendes, lagefest angeordnetes weiteres Führungselement (29) umfasst.

12. Rotationsverdampfer nach Anspruch 11,
**dadurch gekennzeichnet, dass**
jeder der beiden Querträger (19, 21) an seinen beiden Enden mit jeweils einem Schlitten (31, 33) versehen ist, wobei der jeweilige Querträger (19, 21) über die beiden Schlitten (19, 21) verfahrbar an den beiden Führungselementen (27, 29) angeordnet ist.

13. Rotationsverdampfer nach Anspruch 11 oder 12,
**dadurch gekennzeichnet, dass**
die Führungselemente (27, 29) als Rundstäbe ausgebildet sind und/oder die Schlitten (31, 33) mit zu den Rundstäben gegenförmigen, zylinderförmigen Durchgängen versehen sind.

14. Rotationsverdampfer nach einem der vorstehenden Ansprüche,
**dadurch gekennzeichnet, dass**
an den beiden Querträgern (19, 21) jeweils ein Auflage-Element (35, 37) für den Verdampferkolben angebracht ist, welches vorzugsweise eine doppelkegelartige Form aufweist.

15. Rotationsverdampfer nach einem der vorstehenden Ansprüche,
**dadurch gekennzeichnet, dass**
die Kolbenauflage (11) einen Unterbau aufweist, der die Längsführung (25) trägt, wobei bevorzugt ein Heizbad vorgesehen ist, das unterhalb der Kolbenauflage (11) in dem Unterbau angeordnet ist.

## Claims

1. A rotary evaporator having a rotary drive and having a flask support (11) for an evaporator flask couplable to the rotary drive,
wherein the flask support (11) comprises two cross members (19, 21) for supporting the evaporator flask at two mutually spaced apart support regions and a longitudinal guide (25) which has a guide element (27) and at which the two cross members (19, 21) are arranged in a travelable manner to vary the mutual spacing of the two cross members (19, 21);
wherein the guide element (27) is a guide rail, a guide shaft or a threaded spindle; and
wherein the guide element (27) is displaceably guided in the longitudinal direction (23) to displace the evaporator flask between a coupling position with the rotary drive and a position set back from the rotary drive.

2. A rotary evaporator in accordance with claim 1,
**characterized in that**
the guide element (27) is slidingly guided and/or is displaceably guided only in a horizontal direction.

3. A rotary evaporator in accordance with claim 1 or claim 2,
**characterized in that**
the guide element (27) is preloaded in the direction of the coupling position of the evaporator flask by means of a spring device (43).

4. A rotary evaporator in accordance with any one of the preceding claims,
**characterized in that**
the guide element (27) is displaceable by a displacement distance of at least 20 mm, preferably of at least 40 mm.

5. A rotary evaporator in accordance with any one of the preceding claims,
**characterized in that**
the two cross members (19, 21) can be fixed at the guide element (27) of the longitudinal guide (25), in particular of a guide shaft, by means of a respective fixing device (41).

6. A rotary evaporator in accordance with claim 5,
**characterized in that**
the respective fixing device (41) is configured as a latching device and the two cross members (19, 21) are each latchable to the guide element (27) at at least two, preferably at least three, different latch positions.

7. A rotary evaporator in accordance with claim 6,
**characterized in that**
a latch groove (39, 39', 39") is provided at the guide element (27) to latch the respective cross member (19, 21) to the guide element (27) at the respective latch position and a latch projection associated with the respective cross member (19, 21) and movable between a position securing the latched connection and a position releasing the latched connection engages into said latch groove.

8. A rotary evaporator in accordance with claim 7,
**characterized in that**
the respective latch projection is preloaded into the position securing the latched connection and/or is manually movable into the position releasing the latched connection via a respective actuation section accessible to a user.

9. A rotary evaporator in accordance with any one of the preceding claims, **characterized in that**
the traveling of the two cross members (19, 21) takes place by means of a helical gear transmission (27, 31).

10. A rotary evaporator in accordance with claim 9,
**characterized in that**
the guide element (27) is configured as a threaded spindle having a first threaded section (45) with a left hand thread or a right hand thread and having a second threaded section (47) with a thread (47) running opposite thereto, with the first cross member (19) being displaceably and rotationally fixedly supported on the first threaded section (45) via a corresponding first mating thread (31) and the second cross member (21) being displaceably and rotationally fixedly supported on the second threaded section (47) via a corresponding second mating thread (31).

11. A rotary evaporator in accordance with any one of the preceding claims,
**characterized in that**
the longitudinal guide (25) comprises, in addition to the displaceably guided guide element (27), at least one further guide element (29) extending in parallel therewith and arranged at a fixed location.

12. A rotary evaporator in accordance with claim 11,
**characterized in that**
each of the two cross members (19, 21) is provided at its two ends with a respective carriage (31, 33), with the respective cross member (19, 21) being arranged in a travelable manner at the two guide elements (27, 29) via the two carriages (19, 21).

13. A rotary evaporator in accordance with claim 11 or claim 12,
**characterized in that**
the guide elements (27, 29) are configured as round bars; and/or **in that** the carriages (31, 33) are provided with cylindrical passages of counter-shape to the round bars.

14. A rotary evaporator in accordance with any one of the preceding claims,
**characterized in that**
a respective support element (35, 37) for the evaporator flask is attached to the two cross members (19, 21) and preferably has a double conical shape.

15. A rotary evaporator in accordance with any one of the preceding claims,
**characterized in that**
the flask support (11) has a substructure which bears the longitudinal guide (25), with a heating bath preferably being provided which is arranged beneath the flask support (11) in the substructure.

## Revendications

1. Évaporateur rotatif comportant un entraînement en rotation et un porte-ballon (11) pour un ballon d'évaporation susceptible d'être couplé à l'entraînement en rotation,
dans lequel
le porte-ballon (11) comprend deux traverses (19, 21) pour supporter le ballon d'évaporation dans deux zones de support écartées l'une de l'autre, et un guidage longitudinal (25) qui comprend un élément de guidage (27) et sur lequel les deux traverses (19, 21) sont agencées de façon mobile pour varier la distance mutuelle des deux traverses (19, 21),
l'élément de guidage (27) est un rail de guidage, un arbre de guidage ou une broche filetée, et
l'élément de guidage (27) est guidé en translation en direction longitudinale (23) pour déplacer le ballon d'évaporation entre une position de couplage avec l'entraînement en rotation et une position en retrait par rapport à l'entraînement en rotation.

2. Évaporateur rotatif selon la revendication 1,
**caractérisé en ce que**
l'élément de guidage (27) est guidé en coulissement et/ou exclusivement en translation dans une direction horizontale.

3. Évaporateur rotatif selon la revendication 1 ou 2,
**caractérisé en ce que**
l'élément de guidage (27) est précontraint en direction de la position de couplage du ballon d'évaporation au moyen d'un dispositif à ressort (43).

4. Évaporateur rotatif selon l'une des revendications précédentes,
**caractérisé en ce que**
l'élément de guidage (27) est mobile en translation d'un trajet de translation d'au moins 20 mm, de préférence d'au moins 40 mm.

5. Évaporateur rotatif selon l'une des revendications précédentes,
**caractérisé en ce que**
les deux traverses (19, 21) sont susceptibles d'être immobilisées sur l'élément de guidage (27) du guidage longitudinal (25), en particulier sur un arbre de guidage, au moyen d'un dispositif d'immobilisation respectif (41).

6. Évaporateur rotatif selon la revendication 5,
**caractérisé en ce que**
le dispositif d'immobilisation respectif (41) est réalisé sous forme de dispositif d'enclenchement et les deux traverses (19, 21) sont susceptibles de s'enclencher avec l'élément de guidage (27) dans au moins deux, de préférence dans au moins trois positions d'enclenchement différentes.

7. Évaporateur rotatif selon la revendication 6,
**caractérisé en ce que**
pour enclencher la traverse respective (19, 21) avec l'élément de guidage (27) dans la position d'enclenchement respective, il est prévu une rainure d'enclenchement (39, 39', 39") sur l'élément de guidage (27), dans laquelle vient s'engager une saillie d'enclenchement qui est associée à la traverse respective (19, 21) et qui vient s'engager entre une position bloquant l'enclenchement et une position libérant l'enclenchement.

8. Évaporateur rotatif selon la revendication 7,
**caractérisé en ce que**
la saillie d'enclenchement respective est précontrainte dans la position qui bloque l'enclenchement et/ou est mobile manuellement jusque dans la position libérant l'enclenchement par une portion d'actionnement respective accessible pour un utilisateur.

9. Évaporateur rotatif selon l'une des revendications précédentes,
**caractérisé en ce que**
le déplacement des deux traverses (19, 21) s'effectue au moyen d'un mécanisme de transmission à vis (27, 31).

10. Évaporateur rotatif selon la revendication 9,
**caractérisé en ce que**
l'élément de guidage (27) est réalisé sous forme de broche filetée présentant une première portion filetée (45) à pas de vis à gauche ou à droite et une seconde portion filetée (47) à pas de vis opposé (47),
dans lequel la première traverse (19) est mobile en translation et montée solidairement en rotation sur la première portion filetée (45) par un premier pas de vis opposé correspondant (31), et la seconde traverse (21) est mobile en translation et montée solidairement en rotation sur la seconde portion filetée (47) par un second pas de vis opposé correspondant (31).

11. Évaporateur rotatif selon l'une des revendications précédentes,
**caractérisé en ce que**
le guidage longitudinal (25) comprend, en supplément à l'élément de guidage (27) guidé en translation, au moins un autre élément de guidage (29) qui s'étend parallèlement à celui-ci et qui est agencé de façon stationnaire.

12. Évaporateur rotatif selon la revendication 11,
**caractérisé en ce que**
chacune des deux traverses (19, 21) est pourvue à ses deux extrémités d'un chariot respectif (19, 21), la traverse respective (19, 21) étant agencée de façon mobile par les deux chariots (31, 33) sur les deux éléments de guidage (27, 29).

13. Évaporateur rotatif selon la revendication 11 ou 12,
**caractérisé en ce que**
les éléments de guidage (27, 29) sont réalisés sous forme de barreaux ronds et/ou les chariots (31, 33) sont pourvus de trous traversants cylindriques de forme complémentaire à celle des barreaux ronds.

14. Évaporateur rotatif selon l'une des revendications précédentes,
**caractérisé en ce que**
sur les deux traverses (19, 21) est agencé un élément de support respectif (35, 37) pour le ballon d'évaporation, qui présente de préférence une forme biconique.

15. Évaporateur rotatif selon l'une des revendications précédentes,
**caractérisé en ce que**
le porte-ballon (11) comprend une structure de base qui porte le guidage longitudinal (25), et il est prévu de préférence un bain thermostaté qui est agencé au-dessous du porte-ballon (11) dans la structure de base.
